# FASCICULE DE BREVET EUROPEEN

(11) **EP 2 853 184 B1**
(45) Date de publication et mention de la délivrance du brevet: **20.03.2019**
(21) Numéro de dépôt: 14185975.1
(22) Date de dépôt: 23.09.2014
(51) Int. Cl.: A47J 43/046, A47J 43/07, B26D 3/22, B26D 1/29, B26D 3/18, B26D 7/18

(54) **Accessoire pour découper des aliments dont un outil de coupe secondaire fixe comprend des moyens de préhension**
Zubehör zum Schneiden von Lebensmitteln, dessen stationäres sekundäres Schneidwerkzeug Greifmittel umfasst
Accessory for cutting food in which a stationary secondary cutting tool includes gripping means

(30) Priorité: 23.09.2013 FR 1359127
(43) Date de publication de la demande: 01.04.2015
(73) Titulaire: SEB S.A., 69130 Ecully (FR)
(72) Inventeur: Astegno, Jean-Paul, 64420 Espoey (FR); Charles, Patrick, 65290 Louey (FR); Lacourpaille, Gérard, 65380 Ossun (FR); Bessonnet, Dominique, 64420 Artigueloutan (FR); Volatier, Sébastien, 21000 Dijon (FR)
(74) Mandataire: Bourrières, Patrice

(56) Documents cités:
- DE-A1-102008 040 937
- FR-A1- 2 872 399
- US-A- 4 190 208
- US-A- 5 257 575
- US-A1- 2004 060 414

## Description

La présente invention concerne le domaine technique des appareils ménagers motorisés utilisés pour découper des aliments, notamment en tranches, en filaments ou en cubes, par un mouvement de rotation d'un outil de coupe. Dans une application préférée mais non strictement nécessaire, l'invention se rapporte à un accessoire de découpe d'aliments destiné à être adapté de manière amovible sur un boîtier d'entraînement motorisé.

Un document DE202012103202 a proposé un accessoire de découpe d'aliments en cubes comprenant un bol sur lequel est adaptée une platine amovible définissant une chambre de travail dont le fond comprend une fenêtre de coupe s'ouvrant directement dans le bol. La chambre de travail reçoit un outil rotatif tandis que la fenêtre de coupe reçoit une grille de découpe amovible. L'accessoire comprend aussi un couvercle amovible qui est adapté sur la platine amovible de manière à fermer la chambre de travail et qui comprend une trémie d'introduction des aliments située en regard de la fenêtre de coupe. Le couvercle comprend en outre un système d'entraînement d'outil de coupe rotatif destiné à être accouplé avec un bloc moteur amovible conçu pour permettre, par ailleurs, l'entraînement d'un pied de mixage en étant tenu à la main.

Un tel système permet effectivement la découpe d'aliments en cubes mais présente un certain nombre d'inconvénients dus à sa conception. Tout d'abord, la mise en oeuvre d'un bol ne permet pas la découpe de grandes quantités d'aliments. Ensuite, l'usage d'un bloc moteur amovible conçu pour être porté à la main lors de son utilisation avec un pied de mixage ne permet pas de disposer d'une puissance suffisante pour découper en cubes des aliments durs tels que les carottes. Par ailleurs, ce système utilise un élément de verrouillage pour interdire le démontage du couvercle en place sur le bol lorsque le bloc moteur est monté sur le couvercle. Une telle réalisation apparaît sûre, mais avec une construction sophistiquée adaptée à un boîtier motorisé particulier.

De plus, la grille de découpe amovible se révèle à l'usage difficile à manipuler notamment lorsqu'il faut la retirer ou la mettre en place dans la fenêtre de coupe.

En effet, il est nécessaire que la grille de découpe soit parfaitement engagée dans la fenêtre de coupe ce qui nécessite de pouvoir le cas échéant exercer une pression sur la grille de découpe induisant un risque de blessure.

Le document DE102008040937 divulgue un accessoire de découpe d'aliments selon le préambule de la revendication 1.

Il est donc apparu le besoin d'un accessoire de découpe d'aliments en morceaux qui offre une bonne sécurité de manipulation d'un outil de coupe secondaire tel que par exemple une grille de découpe, lors de sa mise en place et de son retrait.

Afin d'atteindre cet objectif, l'invention concerne un accessoire de découpe d'aliments comprenant :
- une platine qui comprend un fond pourvu d'un siège de réception d'un outil de coupe primaire mobile en rotation selon un axe de rotation ainsi que d'une fenêtre de coupe dans laquelle est disposé de manière amovible un outil de coupe secondaire fixe, la platine délimitant en partie une chambre de travail ouverte à l'opposé du fond,
- un couvercle adapté pour fermer en partie au moins la chambre de travail, le couvercle comprenant une goulotte d'introduction des aliments à découper située sensiblement en regard de la fenêtre de coupe,
- des moyens d'entraînement en rotation de l'outil de coupe primaire.

Selon l'invention, l'outil de coupe secondaire comprend un châssis qui porte au moins un organe de coupe et qui comprend un organe de préhension s'étendant à l'extérieur de la chambre de travail en étant accessible depuis l'extérieur de l'ensemble formé par la platine et le couvercle.

La mise en oeuvre d'un outil de coupe secondaire qui comprend un organe de préhension qui s'étend en dehors de la chambre de travail permet une manipulation de cet outil de coupe secondaire sans risque de blessure, ni de salissure après l'usage de l'accessoire de découpe d'aliments selon l'invention.

Selon une caractéristique préférée de l'invention, l'outil de coupe secondaire est engagé dans la fenêtre de coupe selon un mouvement de translation sensiblement parallèle à l'axe de rotation.

Selon encore une autre caractéristique de l'invention, l'organe de préhension s'étend en partie latéralement à l'extérieur de la chambre de travail.

Selon une forme de réalisation de l'invention, l'outil de coupe secondaire comprend au moins un organe de coupe qui est situé en regard de la goulotte et qui possède au moins une arrête de coupe orientée vers la goulotte, tandis que l'outil de coupe primaire rotatif comprend au moins :
- une arrête de coupe principale qui est située dans un plan de coupe sensiblement perpendiculaire à l'axe de rotation,
- et un biseau presseur qui est issu de l'arrête de coupe principale, qui est agencé du côté de l'outil de coupe secondaire, et qui est incliné à partir de l'arrête de coupe principale dans une direction opposée au sens de rotation de l'outil de coupe primaire, de manière à presser les aliments tranchés contre l'outil de coupe secondaire.

Avantageusement alors, l'organe de coupe s'étend dans un plan sensiblement parallèle à l'axe de rotation. En alternative, l'organe de coupe n'est pas nécessairement rectiligne.

Selon une caractéristique de l'invention, l'outil de coupe secondaire comprend une première série d'organes de coupe sensiblement parallèles entre eux. Une telle configuration de l'outil de coupe secondaire permet la découpe d'aliments en bâtonnets.

Selon une variante de cette caractéristique, l'outil de coupe secondaire comprend une deuxième série d'organes de coupe sensiblement parallèles entre eux, la deuxième série d'organes de coupe définissant, avec la première série d'organes de coupe, une grille de découpe. Une telle configuration permet notamment la découpe d'aliments en cubes.

Selon une caractéristique de l'invention, la platine comprend un conduit d'évacuation des aliments découpés qui est raccordé à la fenêtre de coupe et s'étend à l'extérieur de la chambre de travail à l'opposé de la goulotte. La présence d'un tel conduit évite l'usage d'un bol de réception fermé solidaire de l'accessoire de découpe d'aliments de sorte qu'il est possible de découper une grande quantité d'aliments dans la mesure où cette quantité n'est pas limitée par la taille du bol de réception fermé.

Selon une caractéristique de l'invention, le conduit s'étend selon un axe longitudinal qui forme un angle aigu non nul avec l'axe de rotation. Une telle configuration permet d'éloigner l'extrémité libre du conduit de l'axe de rotation de manière à faciliter le placement d'un récipient destiné à recueillir les aliments découpés sous l'extrémité libre du conduit.

Selon une variante de cette caractéristique, l'angle aigu présente une valeur comprise entre 20° et 50°.

Selon une caractéristique de l'invention, le conduit présente une extrémité libre distante d'une longueur supérieure ou égale à 100 mm à partir de la fenêtre de coupe. Une telle hauteur de conduit permet de rendre l'accès par le conduit à la fenêtre de coupe difficile afin de réduire les risques de blessures.

Selon une autre caractéristique de l'invention, le conduit possède une section dont la moyenne des dimensions maximale et minimale est au plus égale à 65,5 mm, et/ou dont la dimension maximale est au plus égale à 76 mm. Une telle dimension vise également à réduire les risques de blessure lors de l'usage de l'accessoire.

Dans le même sens et selon encore une autre caractéristique de l'invention, le conduit comprend, à proximité de son extrémité libre, au moins une barre d'arrêt s'étendant en travers de sa section de passage.

Toujours dans le même sens et selon une caractéristique de l'invention, le conduit possède une section décroissante depuis la fenêtre de coupe jusqu'à son extrémité libre.

Selon une autre caractéristique de l'invention, la goulotte s'étend selon une direction longitudinale sensiblement parallèle à l'axe de rotation.

Selon une forme de réalisation avantageuse permettant de réaliser un accessoire de découpe d'aliments amovible, l'accessoire comprend une embase d'adaptation sur un boîtier d'entraînement motorisé et/ou sur un adaptateur, les moyens d'entraînement étant adaptés pour assurer la transmission du mouvement de rotation entre le boîtier d'entraînement motorisé, ou l'adaptateur, et l'outil de coupe primaire. La mise en oeuvre de l'accessoire avec un boîtier d'entraînement motorisé adapté pour être posé sur un support tout en assurant la stabilité de l'ensemble qu'il forme avec l'accessoire, permet de disposer d'une grande puissance de coupe et donc de découper plus facilement des aliments durs tels que notamment des carottes ou des pommes de terre. En alternative, la platine pourrait notamment être solidaire d'un boîtier d'entraînement motorisé.

Selon une caractéristique de cette forme de réalisation, les moyens d'entraînement en rotation de l'outil de coupe primaire comprennent :
- au niveau de l'embase, un pied d'entraînement adapté pour coopérer avec un arbre de sortie du boîtier d'entraînement motorisé,
- une tête d'entraînement liée en rotation au pied d'entraînement et accessible à partir de la chambre de travail,
- une douille d'entraînement portée par le couvercle et adaptée pour lier en rotation la tête d'entraînement et l'outil de coupe primaire lorsque le couvercle est en position verrouillée.

Une telle conception des moyens d'entraînement permet de s'assurer que l'outil de coupe primaire ne peut être entrainé en rotation si l'ensemble des composants de l'accessoire n'est pas assemblé.

Selon une variante de l'invention, l'embase est portée par la platine.

Selon une forme préférée de réalisation, l'accessoire comprend un carter qui est situé sous la platine, qui porte l'embase et qui comporte une tête d'accouplement liée en rotation avec le pied d'entraînement, la tête d'entraînement comprenant un pied d'accouplement destiné à coopérer, lorsque la platine est montée sur le carter, avec la tête d'accouplement. La mise en oeuvre d'un tel carter permet de conférer à l'accessoire une meilleure esthétique tout en facilitant sa fabrication. De plus, la mise en oeuvre du pied d'accouplement et de la tête d'accouplement évite que l'outil de coupe primaire puisse être entrainé alors que le carter et la platine ne sont pas assemblés.

Selon une autre caractéristique de la forme préférée de réalisation, le carter comprend une fenêtre de passage du conduit. Le carter peut également comprendre une échancrure latérale pour le passage du conduit.

Selon encore une autre caractéristique de la forme préférée de réalisation, le carter comprend des moyens de verrouillage qui coopèrent avec le couvercle en position verrouillée pour lier le couvercle au carter. Ainsi, la platine se trouve parfaitement immobilisée entre le couvercle et le carter. En alternative, le couvercle et le carter pourraient notamment être verrouillés sur la platine.

Selon une autre caractéristique préférée de l'invention, le couvercle est mobile sur la platine entre une position déverrouillée dans laquelle le couvercle peut être retiré de la platine et une position verrouillée.

Selon une variante de cette caractéristique, les moyens de verrouillage sont du type à baïonnette. Une telle construction présente une réalisation simple et une manipulation aisée. A titre de variante, le couvercle peut notamment être assemblé avec le carter par vissage, par une bride ou par un crochet.

Avantageusement alors, des languettes issues du couvercle sont engagées sous des pattes de verrouillage issues du carter lorsque le couvercle est verrouillé avec le carter. Cette disposition permet de simplifier la construction en limitant les épaisseurs de parois.

Avantageusement alors, les languettes sont extérieures, et les pattes de verrouillage sont intérieures. Cette disposition permet de limiter l'encombrement de l'accessoire de découpe d'aliments.

Avantageusement alors, la platine comporte une bordure supérieure s'étendant au dessus des pattes de verrouillage lorsque la platine est en place sur le carter, des fenêtres d'introduction ménagées dans la bordure supérieure pour le passage des languettes, ainsi que des fenêtres de verrouillage prolongeant les fenêtres d'introduction, les languettes étant engagées dans les fenêtres de verrouillage lorsque le couvercle est verrouillé avec le carter. Cette disposition permet de faciliter la mise en place de la platine sur le carter.

L'invention concerne également un ensemble de découpe d'aliments, comportant un accessoire de découpe d'aliments du type précité ainsi qu'un adaptateur amovible comprenant :
- d'une part, des moyens de réception de l'embase et un pied d'adaptation sur un boîtier d'entraînement motorisé,
- et, d'autre part, une tête de transmission adaptée pour coopérer avec le pied d'entraînement de l'embase et un pied de transmission adapté pour coopérer avec l'arbre de sortie du boîtier d'entraînement motorisé, la tête de transmission étant entraînée par le pied de transmission.

La mise en oeuvre d'un tel adaptateur amovible permet d'adapter un même accessoire de découpe sur différents boîtiers motorisés.

Alors selon une forme de réalisation avantageuse, l'adaptateur comprend un bloc de renvoi d'angle comprenant au moins un train d'engrenage assurant un renvoi d'angle entre la tête de transmission et le pied de transmission. Cette disposition permet, par exemple, d'utiliser un accessoire de découpe d'aliments comportant une embase inférieure avec un boîtier motorisé comportant une sortie d'entraînement latérale.

Selon un mode de réalisation de l'invention :
- l'outil de coupe comprend un moyeu d'entraînement comprenant une fenêtre d'entraînement qui présente en coupe transversale une plus petite dimension,
- les moyens d'entraînement comprennent :
   - l'arbre d'entraînement selon l'axe de rotation, qui est solidaire de la platine, qui possède une tête d'entraînement s'étendant dans la chambre de travail et présentant, en coupe transversale, une plus grande dimension strictement inférieure à la plus petite dimension de la fenêtre d'entraînement,
   - la douille d'entraînement qui est libre en rotation selon l'axe de rotation par rapport au couvercle amovible et liée en translation axiale au couvercle amovible, qui comprend un alésage axial d'entraînement de forme complémentaire à celle de la tête d'entraînement et adapté pour s'engager sur ladite tête d'entraînement en translation axiale et qui possède une forme extérieure complémentaire de celle de la fenêtre d'entraînement et adaptée pour s'engager dans ladite fenêtre d'entraînement en translation axiale.

Un tel mode de réalisation de l'invention empêche une mise en rotation de l'outil de coupe primaire lorsque le couvercle n'est pas en place sur la platine.

Selon une variante de ce mode de réalisation, la face interne de la fenêtre d'entraînement converge vers la platine.

Selon une autre variante de ce mode de réalisation, la tête d'entraînement possède une forme cannelée.

Selon encore une autre variante de ce mode de réalisation, la fenêtre d'entraînement possède une forme cannelée.

Ces objets sont atteints également avec un appareil électroménager de préparation culinaire, comportant un boîtier d'entraînement motorisé, si désiré un adaptateur amovible monté sur le boîtier d'entraînement motorisé, et un accessoire de découpe d'aliments amovible monté sur le boîtier d'entraînement motorisé et/ou sur l'adaptateur, du fait que l'accessoire de découpe d'aliments est conforme à l'une au moins des caractéristiques précitées.

Bien entendu, les différentes caractéristiques, variantes, formes et modes de réalisation de l'invention peuvent être associés les uns avec les autres selon diverses combinaisons dans la mesure où ils ne sont pas incompatibles ou exclusifs les uns des autres.

Par ailleurs, diverses autres caractéristiques de l'invention ressortent de la description annexée, effectuée en référence aux dessins qui illustrent des formes non limitatives de réalisation d'un accessoire de découpe d'aliments conforme à l'invention.
- La figure 1 est une coupe axiale schématique d'un accessoire de découpe d'aliments selon l'invention adapté sur un boîtier d'entraînement motorisé à arbre de sortie vertical.
- La figure 2 est une perspective schématique éclatée de l'accessoire de découpe d'aliments représenté à la figure 1.
- La figure 3 est une coupe axiale schématique à plus grande échelle de l'accessoire de découpe d'aliments représenté aux figures 1 et 2.
- La figure 4 est une perspective schématique d'un outil de coupe primaire constitutif de l'accessoire de découpe d'aliments illustré aux figures 1 à 3.
- La figure 5 est une coupe schématique selon le plan V-V de la figure 4.
- La figure 6 est une perspective schématique d'un outil de coupe secondaire constitutif de l'accessoire de découpe d'aliments illustré aux figures 1 à 3.
- La figure 7 est une perspective schématique d'un couvercle constitutif de l'accessoire de découpe d'aliments illustré aux figures 1 à 3.
- La figure 8 et une coupe axiale du couvercle représenté à la figure 7.
- La figure 9 est une perspective schématique d'un carter constitutif de l'accessoire de découpe d'aliments illustré aux figures 1 à 3.
- La figure 10 est une coupe axiale du carter représenté à la figure 9.
- La figure 11 est une coupe axiale d'une platine constitutive de l'accessoire de découpe d'aliments illustré aux figures 1 à 3.
- La figure 12 est une coupe axiale schématique d'un accessoire de découpe d'aliments selon l'invention adapté sur un adaptateur monté sur un boîtier d'entraînement motorisé à arbre de sortie horizontal,
- La figure 13 est une coupe axiale schématique analogue à la figure 3 montrant une autre forme de réalisation d'un accessoire de découpe d'aliments selon l'invention.

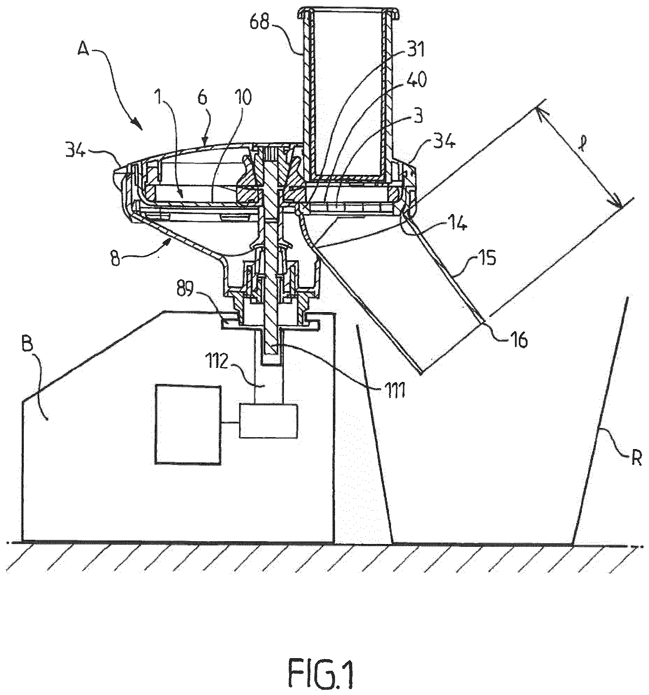

Un accessoire de découpe d'aliments selon l'invention, tel qu'illustré figure 1 et désigné dans son ensemble par la référence A, est destiné à être adapté de manière amovible sur un boîtier d'entraînement motorisé B.

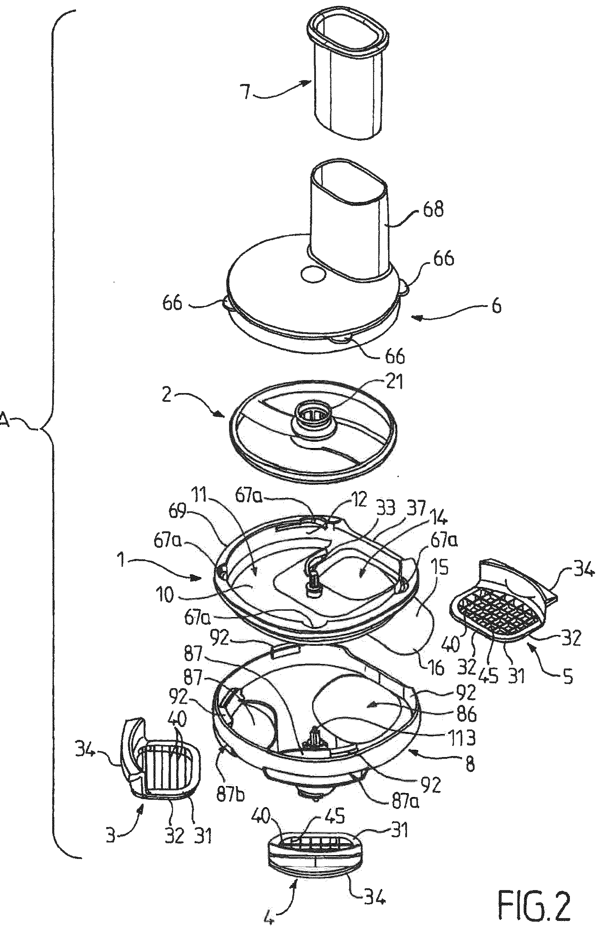

Selon l'exemple illustré et comme cela ressort de la figure 2, l'accessoire de découpe d'aliments A résulte du montage de huit composants principaux, à savoir :
- une platine 1,
- un outil de coupe primaire 2 rotatif,
- trois outils de coupe secondaire 3, 4, 5 fixes interchangeables,
- un couvercle 6,
- un poussoir 7,
- un carter 8,
chaque composant principal pouvant résulter de l'assemblage de différents éléments et les huit composants principaux pouvant en outre être séparés de manière à permettre un nettoyage aisé de l'accessoire de découpe d'aliments.

La platine 1 comprend un fond 10 qui forme un siège de réception 11 pour l'outil de coupe primaire 2 et qui est entouré par un rebord périphérique 12. La platine 1 délimite ainsi en partie une chambre de travail 13. Dans l'exemple de réalisation illustré aux figures, la chambre de travail 13 possède avantageusement une forme générale sensiblement cylindrique de révolution selon un axe de rotation Δ.

Comme cela apparaîtra par la suite, l'outil de coupe primaire 2 est mobile en rotation dans la chambre de travail 13 selon l'axe de rotation Δ sensiblement perpendiculaire au fond 10. Par ailleurs, le fond 10 est pourvu d'une fenêtre de coupe 14 destinée à recevoir l'un ou l'autre des trois outils de coupe secondaire 3 à 5.

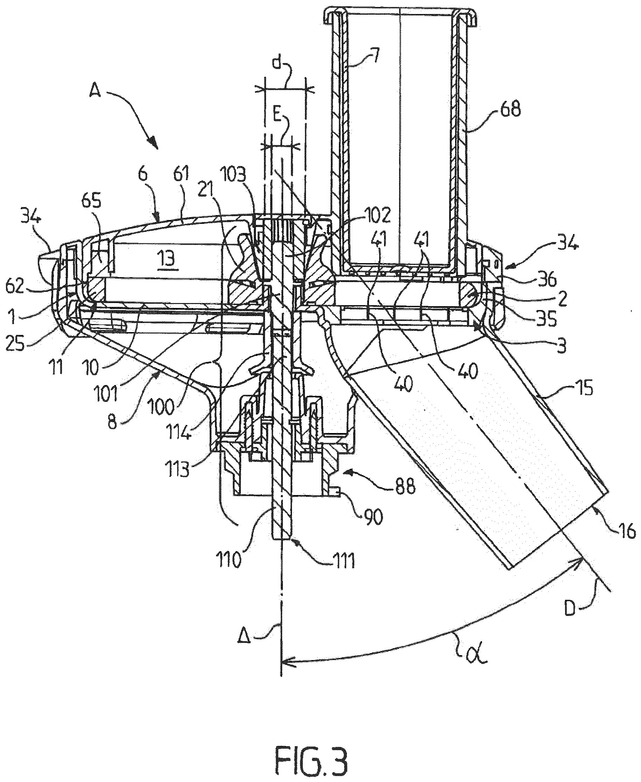

La platine 1 comprend un conduit 15 d'évacuation des aliments découpés qui est raccordé à la fenêtre de coupe 14 et qui s'étend à l'extérieur de la chambre de travail 13. Selon l'exemple illustré, le conduit 15 possède une extrémité sensiblement droite qui s'étend selon un axe longitudinal D formant, avec l'axe de rotation Δ, un angle aigu α compris entre 20° et 50°, visible à la figure 3, de manière à faciliter la mise en place d'un récipient R sous l'extrémité libre 16 du conduit 15. De manière préférée, le conduit 15 présente une extrémité libre 16 distante d'une longueur l supérieure ou égale à 100 mm à partir de la fenêtre de coupe 14. De même, le conduit 15 possède une section dont la moyenne des dimensions maximale et minimale est au plus égale à 65,5 mm, et/ou dont la dimension maximale est au plus égale à 76 mm. De plus, dans le cas présent, le conduit 15 possède une section décroissante depuis la fenêtre de coupe 14 jusqu'à son extrémité libre 16.

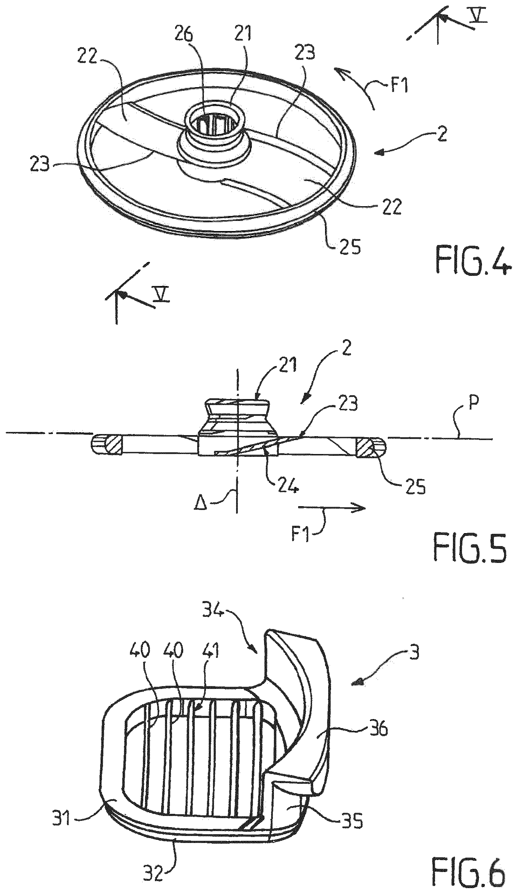

L'outil de coupe primaire 2, illustré seul aux figures 4 et 5, comprend un moyeu d'entraînement 21 à partir duquel s'étendent deux lames 22 qui comprennent chacune une arrête de coupe principale 23 située dans un plan de coupe P sensiblement perpendiculaire à l'axe de rotation Δ. Chaque lame 22 comprend en outre un biseau presseur 24 qui est issu de l'arrête de coupe principale 23 et incliné dans une direction opposée au sens de rotation de l'outil de coupe primaire 2 tel qu'indiqué par la flèche F1. L'outil de coupe primaire 2 comprend également un anneau périphérique 25 qui est destiné à venir en appui contre le siège de réception 11 formé par le bord périphérique extérieur du fond 10. Le moyeu d'entraînement 21 comprend en outre une fenêtre d'entraînement 26 dont la fonction apparaîtra par la suite.

Chaque outil de coupe secondaire 3 à 5 comprend un châssis 31 qui possède une forme extérieure complémentaire de celle de la périphérie de la fenêtre de coupe 14. Le châssis 31 présente ici une forme générale sensiblement rectangulaire à coins arrondis et comprend trois butées latérales 32 chacune située sur un côté du châssis 31 et destinées à venir en appui dans trois logements 33 aménagés à la périphérie de la fenêtre de coupe 14. Le châssis 31 comprend en outre un organe de préhension 34 en L dont une première branche 35 s'étend verticalement à partir d'un côté du châssis 31 de manière à longer le rebord périphérique 12. La première branche 35 présente alors une forme complémentaire de celle du rebord périphérique 12. La première branche 35 se trouve prolongée par une deuxième branche 36 qui s'étend latéralement à partir de la première branche 35 vers l'extérieur de la platine 1 de manière à venir en appui dans une échancrure 37 aménagée dans le rebord périphérique 12. La deuxième branche 36 s'étend alors à l'extérieur de la chambre de travail 13. Ainsi, l'organe de préhension 34, qui s'étend en partie latéralement à l'extérieur de la chambre de travail 13, permet de retirer facilement l'outil de coupe secondaire correspondant hors de la fenêtre de coupe 14 par un mouvement de translation sensiblement parallèle à l'axe de rotation Δ de l'outil de coupe primaire 2.

Les outils de coupe secondaire 3, 4, 5 sont interchangeables. Selon l'exemple illustré, le premier outil de coupe secondaire 3 comprend une première série d'organes de coupe 40 sensiblement parallèles entre eux. Chaque organe de coupe 40 de la première série s'étend selon un axe sensiblement parallèle à l'axe de rotation Δ et possède une arrête de coupe 41 orientée vers le haut. Ainsi le premier outil de coupe secondaire 3 permet de réaliser lorsqu'il est utilisé avec l'outil de coupe primaire 2 une découpe d'aliments en bâtonnets.

Toujours selon l'exemple illustré, les deuxième et troisième outils de coupe secondaire 4 et 5 comprennent en outre chacun une deuxième série d'organes de coupe 45 sensiblement parallèles entre eux qui définissent avec la première série d'organes de coupe 40 une grille de découpe. Ainsi, les deuxième et troisième outils de coupe secondaire 4 et 5 permettent de réaliser des découpes en cubes lorsqu'ils sont utilisés avec l'outil de coupe primaire 2.

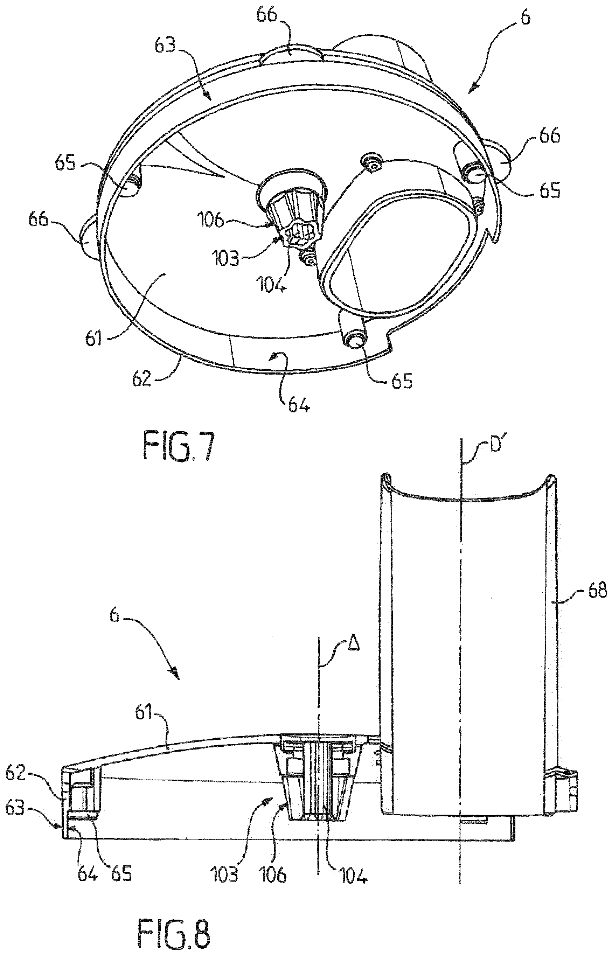

Le couvercle 6, illustré seul aux figures 7 et 8, est destiné à être adapté de manière amovible sur la platine 1 pour fermer en partie au moins la chambre de travail 13. À cet effet, le couvercle 6 comprend un toit 61 qui est bordé sur sa face inférieure par une jupe périphérique 62 qui possède une face extérieure 63 sensiblement cylindrique de révolution selon l'axe de rotation Δ et de forme complémentaire à celle du rebord périphérique 12. Lors de la mise en place du couvercle 6 dans la platine 1, la jupe périphérique 62 est destinée à venir à s'insérer, au niveau de sa partie basse, entre l'anneau périphérique 25 et le rebord périphérique 12 de manière à centrer l'outil de coupe primaire 2. Ainsi, la jupe périphérique 62 possède une face inférieure 64 également sensiblement cylindrique de révolution selon l'axe de rotation Δ. Afin d'éviter que l'outil de coupe primaire 2 ne se soulève lorsqu'il travaille, le couvercle 6 comprend également trois pions 65 destinés à venir en appui sur le dessus de l'anneau périphérique 25.

Le couvercle 6 est mobile sur ou dans la platine 1 entre une position déverrouillée dans laquelle il peut être retiré de la platine 1 selon un mouvement de translation parallèle à l'axe de rotation Δ et une position verrouillée plus particulièrement illustrée à la figure 3 dans laquelle il ne peut pas être désolidarisé de la platine 1. Afin de permettre cette immobilisation du couvercle 6 sur la platine 1, il est mis en oeuvre un système de verrouillage à baïonnette qui comprend quatre languettes 66 portées par la face extérieure 63 de la jupe périphérique 62 et destinées à venir s'engager dans quatre fenêtres d'introduction 67a de la platine 1.

Le couvercle 6 comprend en outre une goulotte 68 d'introduction des aliments à découper. La goulotte 68 s'étend selon une direction longitudinale D' sensiblement parallèle à l'axe de rotation Δ de manière à se trouver en regard de la fenêtre de coupe 14 lorsque le couvercle 6 est en position verrouillée comme le montre la figure 3. Il est à noter que dans le cas présent l'extrémité inférieure de la goulotte 68 s'étend en dessous du toit 61 de manière à guider les aliments à découper au plus près de la fenêtre de coupe 14 tout en laissant un passage pour les lames 22 de l'outil de coupe primaire 2.

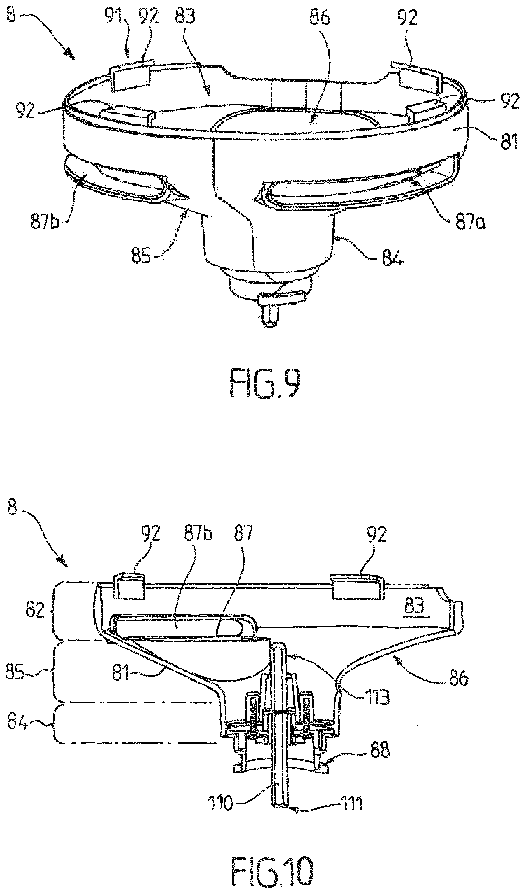

Le carter 8 est situé sous la platine 1. Le carter 8 est destiné à venir s'emboîter sous la platine 1 de manière à améliorer l'esthétique de cette dernière. Ainsi le carter 8 porte la platine 1. Comme le montrent plus particulièrement les figures 9 et 10, le carter 8 comprend une coque 81 qui présente une forme générale d'entonnoir dont la partie supérieure, de forme générale cylindrique, définit une chambre 83 de réception de la platine 1. La coque 81 comprend un tronc 84 de forme générale cylindrique de révolution qui est relié à une partie supérieure 82 par une partie intermédiaire 85 de forme générale tronconique. Afin de permettre l'emboitement de la platine 1 dans le carter 8, la partie intermédiaire 85 comprend une fenêtre 86 pour le passage du conduit 15. Ainsi le conduit 15 s'étend à l'extérieur du carter 8.

Le carter 8 définit avec la platine 1 des logements de rangement 87 pour les outils de coupe secondaire 3, 4, 5 à l'extérieur de la chambre de travail 13. En d'autres termes, les logements de rangement 87 sont ménagés du côté de la platine 1 opposé au siège de réception 11 de l'outil de coupe primaire 2. A cet effet le carter 8 comprend également dans sa partie intermédiaire 85 deux ouvertures latérales 87a, 87b pour la mise en place d'un des outils de coupe secondaire 3, 4, 5 dans l'un des logements de rangement 87. Par ailleurs, l'organe de préhension 34 des outils de coupe secondaire 3, 4, 5 disposés dans les logements de rangement 87 s'étend à l'extérieur de l'ouverture latérale 87a, 87b.

Le tronc 84 porte, à l'opposé de la chambre 83, une embase 88 d'adaptation sur le boîtier d'entraînement motorisé B qui comprend à cet effet un logement d'adaptation 89 dans lequel l'embase 88 est immobilisée par un système de verrouillage à baïonnette 90.

Le carter 8 comprend aussi des moyens de verrouillage 91 qui coopèrent avec le couvercle 6 lorsque ce dernier est en position verrouillée. Dans l'exemple de réalisation illustré sur les figures, les moyens de verrouillage 91 sont du type à baïonnette et comprennent, dans le cas présent, quatre pattes de verrouillage 92 sous lesquelles les languettes 66 du couvercle 6 viennent se placer en position verrouillée de ce dernier. Ainsi, la platine 1 se trouve parfaitement immobilisée entre le couvercle 6 et le carter 8. Le couvercle 6 en position verrouillée vient en prise avec le carter 8. Le couvercle 6 est verrouillé par baïonnette avec le carter 8.

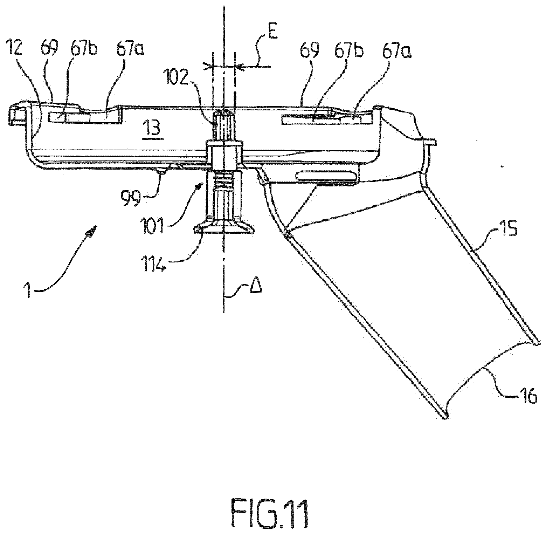

Plus particulièrement dans l'exemple de réalisation illustré aux figures, les languettes 66 issues du couvercle 6 sont engagées sous les pattes de verrouillage 92 issues du carter 8 lorsque le couvercle 6 est verrouillé avec le carter 8. Tel que bien visible sur la figure 7, les languettes 66 issues du couvercle 6 sont extérieures. Tel que bien visible sur la figure 9, les pattes de verrouillage 92 issues du carter 8 sont intérieures. Par ailleurs, tel que bien visible sur la figure 11, la platine 1 comporte une bordure supérieure 69. Les fenêtres d'introduction 67a sont ménagées dans la bordure supérieure 69 pour le passage des languettes 66 du couvercle 6. Des fenêtres de verrouillage 67b prolongent les fenêtres d'introduction 67a. La bordure supérieure 69 s'étend au dessus des pattes de verrouillage 92 lorsque la platine 1 est en place sur le carter. Les languettes 66 sont engagées dans les fenêtres de verrouillage 67b lorsque le couvercle 6 est verrouillé avec le carter 8. Les pattes de verrouillage 92 sont disposées derrière les fenêtres de verrouillage 67b lorsque le couvercle 6 est verrouillé avec le carter 8. Ainsi le couvercle 6 verrouillé avec le carter 8 est aussi verrouillé avec la platine 1. Pour retenir les outils de coupe secondaire 3, 4, 5 disposés dans les logements de rangement 87 lorsque le couvercle 6 est en position verrouillée, la platine 1 comporte des butées 99 disposées sous le fond 10. Les butées coopèrent par exemple avec les organes de coupe 40, 45 et/ou le châssis 31.

L'accessoire de découpe d'aliments A selon l'invention comprend également des moyens d'entraînement 100 de l'outil de coupe primaire 2 en rotation dans la chambre de travail 13.

Selon l'exemple illustré, les moyens d'entraînement 100 comprennent un arbre d'entraînement 101 selon l'axe de rotation Δ qui est solidaire de la platine 1 en étant lié en translation à cette dernière et libre en rotation selon l'axe de rotation Δ par rapport à celle-ci.

Comme le montre notamment la figure 11, l'arbre d'entraînement 101 possède une tête d'entraînement 102 qui s'étend dans la chambre de travail 13. La tête d'entraînement 102 présente en section droite transversale une plus grande dimension E qui est strictement inférieure à la plus petite dimension d de la fenêtre d'entraînement 26 du moyeu d'entraînement 21. Ainsi l'arbre d'entraînement 101 ne peut entraîner directement l'outil de coupe primaire 2. Dans le cas présent la tête d'entraînement 102 possède une forme cannelée.

Afin d'assurer une liaison en rotation du moyeu d'entraînement 21 et de l'arbre d'entraînement 101, les moyens d'entraînement 100 comprennent en outre une douille d'entraînement 103 qui est portée par le couvercle 6 en étant liée en translation à ce dernier et libre en rotation selon l'axe de rotation Δ par rapport à celui-ci.

La douille d'entraînement 103 est adaptée pour lier en rotation la tête d'entraînement 102 et l'outil de coupe primaire 2 lorsque le couvercle 6 est placé sur ou dans la platine 1. À cet effet, la douille d'entraînement 103 comprend un alésage axial d'entraînement 104 qui possède une forme complémentaire de celle de la tête d'entraînement 102. La douille d'entraînement 103 présente une forme extérieure 106 complémentaire de celle de la fenêtre d'entraînement 26. Dans le cas présent, la fenêtre d'entraînement 26 possède une forme cannelée qui converge vers le fond 10 de la platine 1. Les formes générales tronconiques, de la fenêtre d'entraînement 26 et de la forme extérieure 106 de la douille d'entraînement 103, imposent le sens de montage de l'outil de coupe primaire 2 dans la mesure où la douille d'entraînement 103 ne peut s'engager en translation axiale selon la direction de l'axe de rotation Δ sur la tête d'entraînement 102 et dans la fenêtre d'entraînement 26 que si la plus grande section de passage de la fenêtre d'entraînement 26 est orientée vers le haut.

Les moyens d'entraînement 100 comprennent en outre un arbre intermédiaire 110 d'axe de rotation Δ qui est solidaire du carter 8 en étant lié en translation à ce dernier et libre en rotation selon l'axe de rotation Δ par rapport à celui-ci. L'arbre intermédiaire 110 comprend un pied d'entraînement 111 qui s'étend à l'extérieur de l'embase 88 et qui est destiné à coopérer avec un arbre de sortie 112 du boîtier d'entraînement motorisé B, comme le montre la figure 1. L'arbre intermédiaire 110 comprend, à l'opposé du pied d'entraînement 111, une tête d'accouplement 113 qui est située à l'intérieur du carter 8 et qui est destinée à coopérer avec un pied d'accouplement 114 porté par l'arbre d'entraînement 101.

Les différents composants principaux constitutifs décrits ci-dessus sont assemblés de la manière suivante pour former l'accessoire de découpe d'aliments A selon l'invention.

Tout d'abord, la platine 1 est emboîtée dans le carter 8, le conduit 15 étant engagé dans la fenêtre 86 et le pied d'accouplement 114 venant s'engager en translation selon l'axe de rotation Δ sur la tête d'accouplement 113. Ainsi, après cet emboîtement la tête d'entraînement 102 et le pied d'entraînement 111 se trouvent liés en rotation. Le sous-ensemble ainsi formé peut être placé sur le boîtier d'entraînement motorisé B, le pied d'entraînement 111 venant s'emboîter dans l'arbre de sortie 112 tandis que l'embase 88 est verrouillée dans le logement d'adaptation 89 dudit boîtier d'entraînement motorisé B.

Ensuite, l'un des outils de coupe secondaire 3 à 5 est disposé dans la fenêtre de coupe 14 selon un mouvement de translation sensiblement parallèle à l'axe de rotation Δ tandis que les deux autres outils de coupe secondaire sont chacun placés dans l'un des logements de rangement 87.

L'outil de coupe primaire 2 peut alors être placé dans la chambre de travail 13, la fenêtre d'entraînement 26 étant centrée sur la tête d'entraînement 102. Le montage de l'accessoire de découpe d'aliments A est achevé en plaçant le couvercle 6 sur la platine 1, la jupe périphérique 62 venant entre l'anneau périphérique 25 et le rebord périphérique 12 tandis que la douille d'entraînement 103 s'engage dans la fenêtre d'entraînement 26 et sur la tête d'entraînement 102. Le verrouillage du couvercle 6 est assuré par un mouvement de rotation selon l'axe de rotation Δ de manière à venir placer les languettes 66 sous les pattes de verrouillage 92.

L'accessoire de découpe d'aliments A peut alors être utilisé pour assurer la découpe d'aliments.

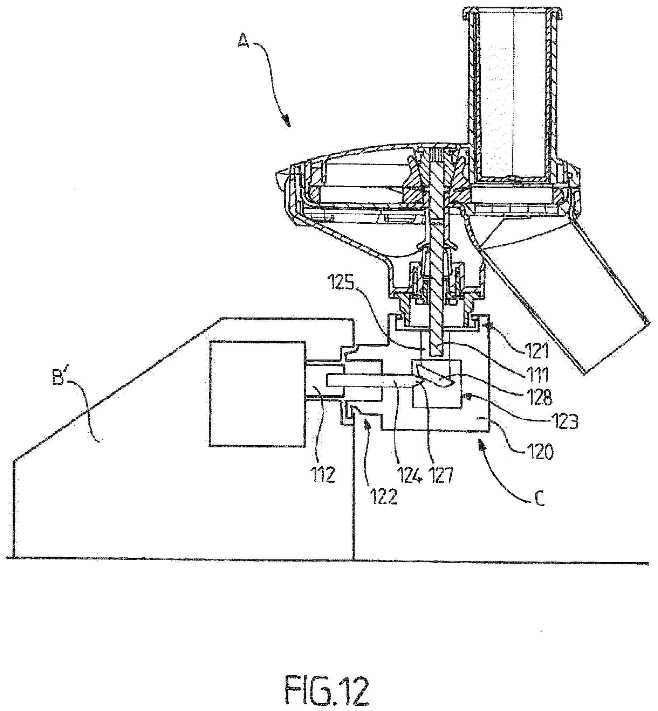

Selon l'exemple illustré à la figure 1, le boîtier d'entraînement motorisé B comprend un arbre de sortie 112 vertical. Toutefois, selon l'invention, l'accessoire de découpe d'aliments A peut aussi être utilisé avec un boîtier d'entraînement motorisé B', tel qu'illustré figure 12, dont l'arbre de sortie 112 est horizontal.

A cet effet, l'accessoire de découpe d'aliments A peut être associé à un adaptateur C amovible comprenant des moyens 121 de réception de l'embase 88 et un pied d'adaptation 122 sur le boîtier d'entraînement motorisé B'.

Afin d'assurer la transmission du mouvement de rotation de l'arbre de sortie 112 sensiblement horizontal au pied d'entraînement 111 d'axe de rotation Δ sensiblement vertical, l'adaptateur C comporte un bloc de renvoi d'angle 120 comprenant au moins un train d'engrenage 123 assurant un renvoi d'angle entre un pied de transmission 124 qui coopère avec l'arbre de sortie 112 et une tête de transmission 125 qui coopère avec le pied d'entraînement 111, le pied de transmission 124 ayant un mouvement de rotation sur lui-même coaxial à celui de l'arbre d'entraînement 101 et la tête de transmission 125 ayant un mouvement de rotation sur elle-même coaxial à celui du pied d'entraînement 111.

Le train d'engrenage 123 comprend par exemple deux pignons coniques, l'un 127 lié en rotation au pied de transmission 124, l'autre 128 à la tête de transmission 125.

A titre de variante, l'adaptateur C ne comporte pas nécessairement un bloc de renvoi d'angle 120. L'adaptateur C peut notamment comporter un pied d'adaptation 122 dont la configuration est différente de la configuration de l'embase 88 de l'accessoire de découpe d'aliments A, pour autoriser le montage de l'accessoire de découpe d'aliments A sur d'autres types de boîtiers d'entraînement motorisés.

A titre de variante, l'accessoire de découpe d'aliments A peut comporter au moins un outil de coupe secondaire 3, 4, 5 fixe. Si désiré l'accessoire de découpe d'aliments A peut comporter plusieurs outils de coupe secondaire fixes interchangeables.

A titre de variante, les moyens de verrouillage 91 ne sont pas nécessairement du type à baïonnette. Le couvercle 6 peut notamment être assemblé avec le carter 8 par vissage, par au moins une bride ou par au moins un crochet.

A titre de variante, le couvercle 6 n'est pas nécessairement amovible par rapport à la platine 1 et au carter 8. Le couvercle 6 peut notamment être monté pivotant sur la platine 1 ou sur le carter 8.

A titre de variante, la platine 1 n'est pas nécessairement verrouillée avec le couvercle 6 lorsque le carter 8 est verrouillé avec le couvercle 6.

A titre de variante, le carter 8 ne comprend pas nécessairement des moyens de verrouillage 91 coopérant avec le couvercle 6. Le carter 8 peut notamment comprendre des moyens de verrouillage coopérant avec la platine 1, la platine 1 comportant d'autres moyens de verrouillage coopérant avec le couvercle 6. Si désiré, le couvercle 6 peut par exemple être verrouillé avec la platine 1 au moyen des languettes 66 engagées dans les fenêtres de verrouillage 67b.

Selon l'exemple de réalisation décrit précédemment en relation avec les figures 1 à 12, l'accessoire de découpe d'aliments A comprend un carter 8. Toutefois, la mise en oeuvre d'un tel carter 8 n'est pas nécessaire à la réalisation d'un accessoire de découpe d'aliments A conforme à l'invention.

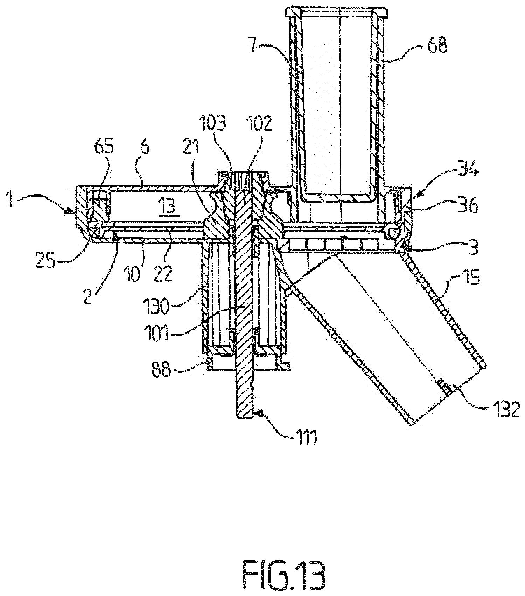

Ainsi, la figure 13 illustre une autre forme de réalisation selon laquelle il n'est pas mis en oeuvre de carter. La platine 1 comprend alors un tronc 130 qui porte l'embase 88. Le couvercle 6 est verrouillé sur la platine 1. Par ailleurs, selon cette forme de réalisation, l'arbre d'entraînement 101 intègre à la fois la tête d'entraînement 102 et le pied d'entraînement 111 et s'étend depuis le dessous de l'embase 88 jusqu'à l'intérieur de la chambre de travail 13.

Par ailleurs, selon cet exemple de réalisation le conduit 15 comprend, à proximité de son extrémité libre 16, au moins une barre d'arrêt 132 s'étendant en travers de sa section de passage. La barre d'arrêt 132 fait ainsi obstacle au passage d'une main par le conduit 15.

Bien entendu diverses autres modifications peuvent être apportées à l'accessoire de découpe d'aliments selon l'invention dans le cadre des revendications annexées.

## Revendications

1. Accessoire de découpe d'aliments (A) comprenant :
- une platine (1) qui comprend un fond (10) pourvu d'un siège de réception (11) d'un outil de coupe primaire (2) mobile en rotation selon un axe de rotation (Δ) ainsi que d'une fenêtre de coupe (14) dans laquelle est disposé de manière amovible un outil de coupe secondaire (3 ; 4 ; 5) fixe, la platine (1) délimitant en partie une chambre de travail (13) ouverte à l'opposé du fond (10),
- un couvercle (6) adapté pour fermer en partie au moins la chambre de travail (13), le couvercle (6) comprenant une goulotte (68) d'introduction des aliments à découper située sensiblement en regard de la fenêtre de coupe (14),
- des moyens d'entraînement (100) en rotation de l'outil de coupe primaire (2), **caractérisé en ce que** l'outil de coupe secondaire (3 ; 4 ; 5) comprend un châssis (31) qui porte au moins un organe de coupe (40) et qui comprend un organe de préhension (34) s'étendant à l'extérieur de la chambre de travail (13) en étant accessible depuis l'extérieur de l'ensemble formé par la platine (1) et le couvercle (6).

2. Accessoire de découpe d'aliments (A) selon la revendication 1, **caractérisé en ce que** l'outil de coupe secondaire (3 ; 4 ; 5) est engagé dans la fenêtre de coupe (14) selon un mouvement de translation sensiblement parallèle à l'axe de rotation (Δ).

3. Accessoire de découpe d'aliments (A) selon l'une des revendications 1 ou 2, **caractérisé en ce que** l'organe de préhension (34) s'étend en partie latéralement à l'extérieur de la chambre de travail (13).

4. Accessoire de découpe d'aliments (A) selon l'une des revendications 1 à 3, **caractérisé en ce que** :
- l'outil de coupe secondaire (3 ; 4 ; 5) comprend au moins un organe de coupe (40) qui est situé en regard de la goulotte (68) et qui possède au moins une arrête de coupe (41) orientée vers la goulotte (68),
- et l'outil de coupe primaire (2) rotatif comprenant au moins :
- une arrête de coupe principale (23) qui est située dans un plan de coupe (P) sensiblement perpendiculaire à l'axe de rotation (Δ),
- et un biseau presseur (24) qui est issu de l'arrête de coupe principale (23), qui est agencé du côté de l'outil de coupe secondaire (3 ; 4 ; 5), et qui est incliné à partir de l'arrête de coupe principale (23) dans une direction opposée au sens de rotation de l'outil de coupe primaire (2), de manière à presser les aliments tranchés contre l'outil de coupe secondaire (3 ; 4 ; 5).

5. Accessoire de découpe d'aliments (A) selon la revendication 4, **caractérisé en ce que** l'outil de coupe secondaire (3 ; 4 ; 5) comprend une première série d'organes de coupe (40) sensiblement parallèles entre eux.

6. Accessoire de découpe d'aliments (A) selon la revendication 5, **caractérisé en ce que** l'outil de coupe secondaire (4, 5) comprend une deuxième série d'organes de coupe (45) sensiblement parallèles entre eux, la deuxième série d'organes de coupe (45) définissant, avec la première série d'organes de coupe (40), une grille de découpe.

7. Accessoire de découpe d'aliments (A) selon l'une des revendications 1 à 6, **caractérisé en ce que** la platine (1) comprend un conduit (15) d'évacuation des aliments découpés qui est raccordé à la fenêtre de coupe (14) et qui s'étend à l'extérieur de la chambre de travail (13) à l'opposé de la goulotte (68).

8. Accessoire de découpe d'aliments (A) selon la revendication 7, **caractérisé en ce que** le conduit (15) s'étend selon un axe longitudinal (D) qui forme un angle aigu (a) non nul avec l'axe de rotation (Δ).

9. Accessoire de découpe d'aliments (A) selon la revendication 8, **caractérisé en ce que** l'angle aigu (α) présente une valeur comprise entre 20° et 50°.

10. Accessoire de découpe d'aliments (A) selon l'une des revendication 7 à 9, **caractérisé en ce que** le conduit (15) présente une extrémité libre (16) distante d'une longueur (l) supérieure ou égale à 100 mm à partir de la fenêtre de coupe (14).

11. Accessoire de découpe d'aliments (A) selon l'une des revendications 7 à 10, **caractérisé en ce que** le conduit (15) possède une section dont la moyenne des dimensions maximale et minimale est au plus égale à 65,5 mm, et/ou dont la dimension maximale est au plus égale à 76 mm.

12. Accessoire de découpe d'aliments (A) selon l'une des revendications 7 à 11, **caractérisé en ce que** le conduit (15) comprend, à proximité de son extrémité libre (16), au moins une barre d'arrêt (132) d'étendant en travers de sa section de passage.

13. Accessoire de découpe d'aliments (A) selon l'une des revendications 1 à 12, **caractérisé en ce que** la goulotte (68) s'étend selon une direction longitudinale (D') sensiblement parallèle à l'axe de rotation (Δ).

14. Accessoire de découpe d'aliments (A) selon l'une des revendications 1 à 13, **caractérisé en ce qu'**il comprend une embase (88) d'adaptation sur un boîtier d'entraînement motorisé (B) et/ou sur un adaptateur (C), les moyens d'entraînement (100) étant adaptés pour assurer la transmission du mouvement de rotation entre le boîtier d'entraînement motorisé (B), ou l'adaptateur (C), et l'outil de coupe primaire (2).

15. Appareil électroménager de préparation culinaire, comportant un boîtier d'entraînement motorisé (B, B'), si désiré un adaptateur (C) amovible monté sur le boîtier d'entraînement motorisé (B'), et un accessoire de découpe d'aliments (A) amovible monté sur le boîtier d'entraînement motorisé (B) et/ou sur l'adaptateur (C), **caractérisé en ce que** l'accessoire de découpe d'aliments (A) est conforme à l'une des revendications 1 à 14.

## Patentansprüche

1. Zubehörteil zum Schneiden von Lebensmitteln (A), umfassend:
- eine Platte (1), die einen Boden (10), der mit einem Sitz (11) zur Aufnahme eines primären Schneidwerkzeugs (2) versehen ist, das um eine Drehachse (Δ) drehbar ist, sowie ein Schneidfenster (14) umfasst, in dem ein feststehendes sekundäres Schneidwerkzeug (3; 4; 5) entnehmbar angeordnet ist, wobei die Platte (1) teilweise eine Arbeitskammer begrenzt (13), die gegenüber dem Boden (10) offen ist,
- eine Abdeckung (6), die eingerichtet ist, zumindest die Arbeitskammer (13) teilweise zu schließen, wobei die Abdeckung (6) eine Rutsche (68) zur Einführung von zu schneidenden Lebensmitteln umfasst, die sich im Wesentlichen gegenüber dem Schneidfenster (14) befindet,
- Antriebsmittel (100) zum Drehen des primären Schneidwerkzeugs (2), **dadurch gekennzeichnet, dass** das sekundäre Schneidwerkzeug (3; 4; 5) einen Rahmen (31) umfasst, der mindestens ein Schneidelement (40) trägt und der ein Greifelement (34) umfasst, das sich außerhalb der Arbeitskammer (13) erstreckt, wobei es von der Außenseite der durch die Platte (1) und die Abdeckung (6) gebildeten Baugruppe zugänglich ist.

2. Zubehörteil zum Schneiden von Lebensmitteln (A) nach Anspruch 1, **dadurch gekennzeichnet, dass** das sekundäre Schneidwerkzeug (3; 4; 5) in das Schneidfenster (14) in einer Translationsbewegung im Wesentlichen parallel zu der Drehachse (Δ) eingreift.

3. Zubehörteil zum Schneiden von Lebensmitteln (A) nach einem der Ansprüche 1 oder 2, **dadurch gekennzeichnet, dass** sich das Greifelement (34) teilweise seitlich außerhalb der Arbeitskammer (13) erstreckt.

4. Zubehörteil zum Schneiden von Lebensmitteln (A) nach einem der Ansprüche 1 bis 3, **dadurch gekennzeichnet, dass**:
- das sekundäre Schneidwerkzeug (3; 4; 5) mindestens ein Schneidelement (40) umfasst, das sich gegenüber der Rutsche (68) befindet, und das die mindestens eine der Rutsche (68) zugewandte Schneidkante (41) besitzt, und
- das primäre drehbare Schneidwerkzeug (2) mindestens umfasst:
- eine Schneidkante (23), die sich in einer Schnittebene (P) im Wesentlichen senkrecht zu der Drehachse (Δ) befindet, und
- eine Druckabschrägung (24), die von der Hauptschneidkante (23) ausgeht, welche auf der Seite des sekundären Schneidwerkzeugs (3; 4; 5) angeordnet ist, und die ausgehend von der Hauptschneidkante (23) in einer Richtung entgegen der Drehrichtung des primären Schneidwerkzeugs (2) geneigt ist, um das geschnittene Lebensmittel gegen das sekundäre Schneidwerkzeug (3; 4; 5) zu drücken.

5. Zubehörteil zum Schneiden von Lebensmitteln (A) nach Anspruch 4, **dadurch gekennzeichnet, dass** das sekundäre Schneidwerkzeug (3; 4; 5) eine erste Reihe von Schneidelementen (40) umfasst, die im Wesentlichen parallel zueinander sind.

6. Zubehörteil zum Schneiden von Lebensmitteln (A) nach Anspruch 5, **dadurch gekennzeichnet, dass** das sekundäre Schneidwerkzeug (4, 5) eine zweite Reihe von im Wesentlichen parallelen Schneidelementen (45) umfasst, wobei die zweite Reihe von Schneidelementen (45) mit der ersten Reihe von Schneidelementen (40) einen Schneidrost definiert.

7. Zubehörteil zum Schneiden von Lebensmitteln (A) nach einem der Ansprüche 1 bis 6, **dadurch gekennzeichnet, dass** die Platte (1) einen Leitung (15) zum Abtransport der geschnittenen Lebensmittel aufweist, die mit dem Schneidfenster (14) verbunden ist, und die sich außerhalb der Arbeitskammer (13) gegenüber der Rutsche (68) erstreckt.

8. Zubehörteil zum Schneiden von Lebensmitteln (A) nach Anspruch 7, **dadurch gekennzeichnet, dass** sich die Leitung (15) entlang einer Längsachse (D) erstreckt, die einen spitzen Winkel (α) ungleich null mit der Drehachse (Δ) bildet.

9. Zubehörteil zum Schneiden von Lebensmitteln (A) nach Anspruch 8, **dadurch gekennzeichnet, dass** der spitze Winkel (α) einen Wert zwischen 20° und 50° aufweist.

10. Zubehörteil zum Schneiden von Lebensmitteln (A) nach einem der Anspruch 7 bis 9, **dadurch gekennzeichnet, dass** die Leitung (15) ein freies Ende (16) aufweist, das um eine Länge (l) von mindestens 100 mm oder mehr von dem Schneidfenster (14) entfernt ist.

11. Zubehörteil zum Schneiden von Lebensmitteln (A) nach einem der Ansprüche 7 bis 10, **dadurch gekennzeichnet, dass** die Leitung (15) einen Querschnitt aufweist, dessen Durchschnitt der maximalen und minimalen Abmessung höchstens 65,5 mm beträgt und / oder deren maximale Abmessung nicht mehr als 76 mm beträgt.

12. Zubehörteil zum Schneiden von Lebensmitteln (A) nach einem der Ansprüche 7 bis 11, **dadurch gekennzeichnet, dass** die Leitung (15) nahe ihrem freien Ende (16) mindestens eine Anschlagstange (132) aufweist, die sich über ihren Durchgangsquerschnitt erstreckt.

13. Zubehörteil zum Schneiden von Lebensmitteln (A) nach einem der Ansprüche 1 bis 12, **dadurch gekennzeichnet, dass** sich die Rutsche (68) in einer Längsrichtung (D') im Wesentlichen parallel zu der Drehachse (Δ) erstreckt.

14. Zubehörteil zum Schneiden von Lebensmitteln (A) nach einem der Ansprüche 1 bis 13, **dadurch gekennzeichnet, dass** es eine Basis (88) zur Anpassung an eine motorisierte Antriebsbox (B) und / oder an einen Adapter (C) umfasst, wobei die Antriebsmittel (100) dazu eingerichtet sind, die Übertragung der Drehbewegung zwischen der motorisierten Antriebsbox (B) oder dem Adapter (C) und dem primären Schneidwerkzeug (2) sicherzustellen.

15. Elektrisches Haushaltsgerät für die Lebensmittelzubereitung, aufweisend eine motorisierte Antriebsbox (B, B'), gegebenenfalls einen abnehmbaren Adapter (C), der an der motorisierten Antriebsbox (B') angebracht ist, und ein abnehmbares Zubehörteil zum Schneiden von Lebensmitteln (A), das an der motorisierten Antriebsbox (B) und / oder an dem Adapter (C) angebracht ist, **dadurch gekennzeichnet, dass** das Zubehörteil zum Schneiden von Lebensmitteln (A) nach einem der Ansprüche 1 bis 14 ist.

## Claims

1. Accessory (A) for cutting food, comprising:
- a plate (1) that comprises a bottom (10) provided with a seat (11) for receiving a primary cutting tool (2) mobile in rotation about an axis of rotation (Δ) as well as a cutting opening (14) in which a stationary secondary cutting tool (3; 4; 5) is removably disposed, the plate (1) partly defining a working chamber (13) open opposite the bottom (10),
- a cover (6) adapted for partly closing at least the working chamber (13), the cover (6) comprising a chute (68) for introduction of the food to be cut, located substantially facing the cutting opening (14),
- means (100) for driving the primary cutting tool (2) in rotation,
**characterised in that** the secondary cutting tool (3; 4; 5) comprises a chassis (31) which carries at least one cutting member (40) and which comprises a gripping member (34) extending outside of the working chamber (13) while being accessible from the outside of the assembly formed by the plate (1) and the cover (6).

2. Accessory (A) for cutting food according to claim 1, **characterised in that** the secondary cutting tool (3; 4; 5) is inserted into the cutting opening (14) according to a movement of translation substantially parallel to the axis of rotation (Δ).

3. Accessory (A) for cutting food according to one of claims 1 or 2, **characterised in that** the gripping member (34) partly extends laterally outside of the working chamber (13).

4. Accessory (A) for cutting food according to one of claims 1 to 3, **characterised in that**:
- the secondary cutting tool (3; 4; 5) comprises at least one cutting member (40) which is located facing the chute (68) and which has at least one cutting edge (41) oriented towards the chute (68),
- and the rotary primary cutting tool (2) comprises at least:
- a main cutting edge (23) which is located in a cutting plane (P) substantially perpendicular to the axis of rotation (Δ),
- and a pressing bevel (24) which comes from the main cutting edge (23), which is arranged on the side near the secondary cutting tool (3; 4; 5), and which is inclined from the main cutting edge (23) in a direction opposite to the direction of rotation of the primary cutting tool (2), in such a way as to press the cut food against the secondary cutting tool (3; 4; 5).

5. Accessory (A) for cutting food according to claim 4, **characterised in that** the secondary cutting tool (3; 4; 5) comprises a first series of cutting members (40) substantially parallel to each other.

6. Accessory (A) for cutting food according to claim 5, **characterised in that** the secondary cutting tool (4; 5) comprises a second series of cutting members (45) substantially parallel to each other, the second series of cutting members (45) defining, with the first series of cutting members (40), a cutting grid.

7. Accessory (A) for cutting food according to one of claims 1 to 6, **characterised in that** the plate (1) comprises a duct (15) for evacuating the cut food which is connected to the cutting opening (14) and which extends outside of the working chamber (13) opposite the chute (68).

8. Accessory (A) for cutting food according to claim 7, **characterised in that** the duct (15) extends along a longitudinal axis (D) that forms a non-zero acute angle (α) with the axis of rotation (Δ).

9. Accessory (A) for cutting food according to claim 8, **characterised in that** the acute angle (α) has a value between 20° and 50°.

10. Accessory (A) for cutting food according to one of claim 7 to 9, **characterised in that** the duct (15) has a free end (16) distant by a length (I) greater than or equal to 100mm starting from the cutting opening (14).

11. Accessory (A) for cutting food according to one of claims 7 to 10, **characterised in that** the duct (15) has a cross-section for which the average of the maximum and minimum dimension is at most equal to 65.5mm, and/or the maximum dimension of which is at most equal to 76mm.

12. Accessory (A) for cutting food according to one of claims 7 to 11, **characterised in that** the duct (15) comprises, near its free end (16), at least one stop bar (132) extending across its cross-section of passage.

13. Accessory (A) for cutting food according to one of claims 1 to 12, **characterised in that** the chute (68) extends in a longitudinal direction (D') substantially parallel to the axis of rotation (Δ).

14. Accessory (A) for cutting food according to one of claims 1 to 13, **characterised in that** it comprises a base (88) for adaptation onto a motorised drive case (B) and/or onto an adapter (C), the drive means (100) being adapted for ensuring the transmission of the movement of rotation between the motorised drive case (B), or the adapter (C), and the primary cutting tool (2).

15. Electrical household appliance for food preparation, comprising a motorised drive case (B, B'), if desired a removable adapter (C) mounted on the motorised drive case (B'), and a removable accessory (A) for cutting food mounted on the motorised drive case (B) and/or on the adapter (C), **characterised in that** the accessory (A) for cutting food is according to one of claims 1 to 14.
